# EUROPÄISCHE PATENTSCHRIFT

(11) **EP 3 097 468 B1**
(45) Veröffentlichungstag und Bekanntmachung des Hinweises auf die Patenterteilung: **09.02.2022**
(21) Anmeldenummer: 14825280.2
(22) Anmeldetag: 15.12.2014
(51) Int. Cl.: G06F 3/048, G06F 3/0482, G06F 3/0488, B60K 35/00, B60K 37/06

(54) **ANWENDERSCHNITTSTELLE UND VERFAHREN ZUR ANPASSUNG EINER ANSICHT AUF EINER ANZEIGEEINHEIT**
USER INTERFACE AND METHOD FOR ADAPTING A VIEW OF A DISPLAY UNIT
INTERFACE UTILISATEUR, ET PROCÉDÉ POUR L'ADAPTATION D'UNE VUE SUR UNE UNITÉ D'AFFICHAGE

(30) Priorität: 21.01.2014 DE 102014200993
(43) Veröffentlichungstag der Anmeldung: 30.11.2016
(73) Patentinhaber: Volkswagen Aktiengesellschaft, 38440 Wolfsburg (DE)
(72) Erfinder: WILD, Holger, 10179 Berlin (DE)
(86) Internationale Anmeldenummer: PCT/EP2014/077791
(87) Internationale Veröffentlichungsnummer: WO 2015/110227

(56) Entgegenhaltungen:
- EP-A2- 2 595 042
- CN-A- 103 324 435
- DE-A1-102007 061 993
- DE-A1-102008 054 113
- DE-A1-102009 058 145
- US-A1- 2007 252 822
- US-A1- 2010 248 788
- US-A1- 2011 107 272

## Beschreibung

Die vorliegende Erfindung betrifft eine Anwenderschnittstelle sowie ein Verfahren zur Anpassung einer Ansicht auf einer Anzeigeeinheit einer Anwenderschnittstelle. Insbesondere betrifft die vorliegende Erfindung Verbesserungen der Ergonomie und der Verringerung einer Anzahl erforderlicher Bedienschritte beim Erzeugen geteilter Ansichten auf einer Anzeigeeinheit.

### Stand der Technik

Das Konzept geteilter Ansichten ("Split Screen") ermöglicht dem Nutzer die parallele Anzeige und Bedienung von zwei oder mehr unterschiedlichen Kontexten innerhalb einer Anzeigeeinheit (z.B. "Matrix-Display", "Touch Display", "Touch Screen" o.Ä.). Bedienkonzepte ohne Touch Screen-Bedienung haben das Problem der Fokuseinstellungen auf das zu bedienende/anzupassende Fenster. Insbesondere bei der Bedienung von Anzeigeeinheiten einer Anwenderschnittstelle innerhalb von Fortbewegungsmitteln ist es erforderlich, dass die vorzunehmenden Bedienschritte und deren Kontrolle den Anwender nicht von seiner primären Aufgabe der Führung des Fortbewegungsmittels abhalten.

US 2013/0145279 A1 betrifft eine portable Anwenderschnittstelle für ein Fortbewegungsmittel, bei welchem Sinnbilder unterschiedlicher Funktionen in einer Randleiste per Drag and Drop in einen Anzeigebedienbereich gezogen werden können, um mit ihnen assoziierte Funktionen und Schaltflächen in vergrößerter Form darzustellen.

DE 10 2009 058 145 A1 offenbart Bedienverfahren für eine Anzeigevorrichtung eines Fahrzeugs, welche beispielsweise ein Teilen einer Bildschirmansicht durch Spreizen zweier Finger unter Kontakt zu einer berührungsempfindlichen Oberfläche vorgeschlagen wird. Zudem wird die Verwendung einer Annäherungssensorik für den Wechsel zwischen zwei unterschiedlichen Darstellungsvarianten vorgeschlagen. Ist die Bildschirmdarstellung wie vorgeschrieben geteilt worden, kann in einem jeweiligen Teilbereich ein Auswahlmenü zur Selektion der im Teilbereich anzuzeigenden Anwendung angezeigt werden.

Sogenannte "Drag and Drop"-Gesten werden lediglich in Zusammenhang mit dem Start einer Anwendung am Beispiel eines Zuordnens einer Audioausgabe zu einem Lautsprecher offenbart.

DE 10 2007 061 993 A1 offenbart ein mobiles Endgerät mit einer Anzeigeeinheit, welche durch eine mittige Anzeige eines Menübalkens optisch zweigeteilt werden kann. Durch Berühren und Ziehen des Menübalkens kann selbiger an eine gewünschte neue Position auf dem berührungsempfindlichen Bildschirm verschoben werden.

US 2011/0107272 A1 offenbart eine Anwenderschnittstelle und ein Verfahren zur Anpassung einer Erscheinungsform der Anwenderschnittstelle. In einer geteilten Bildschirmansicht kann durch das Rotieren einer Walze, welche anstelle eines bisherigen Funktionsumfangs in einem Teilbereich des Bildschirms angezeigt wird, ein neuer Funktionsumfang für diesen Teilbereich ausgewählt und zugewiesen werden.

US 2007/0252822 A1 betrifft eine Vorrichtung und ein Verfahren zum Bereitstellen einer Bereichsunterteilungseinheit mit einer berührungssensitiven Funktion. Ein hardwaretechnisch ausgestalteter Trennbalken kann zur Unterteilung eines Bildschirms verwendet werden. Sofern ein im Bereich des Trennbalkens angezeigtes Sinnbild (Icon) vom Anwender angeklickt wird, wird eine mit dem Icon assoziierte Funktion ausgeführt.

CN 103 324 435 A (D4) offenbart einen Demarkationsbereich zwischen einem ersten Bildschirmteil und einem zweiten Bildschirmteil. Über eine Wischgeste kann zudem eine Taskbar zum Vorschein gebracht werden, aus welcher Programmicons in den ersten oder zweiten Bildschirmbereich gezogen werden und diesem hinzugefügt werden können.

US 2010/248788 A1 zeigt eine Anwenderschnittstelle mit einem Split-Screen-Modus. In einem zwischen den beiden Split-Screen-Bereichen einblendbaren Feld können Icons repräsentierend einzelne Funktionen angezeigt und mittels Wischgesten den Split-Screen-Bereichen zugeordnet werden.

Der Stand der Technik in Form der vorgenannten Offenbarungen schöpft die Möglichkeiten zur Bedienung einer Anwenderschnittstelle nicht bestmöglich aus. Es ist daher eine Aufgabe der vorliegenden Erfindung, die Ergonomie bei der Bedienung einer Anwenderschnittstelle weiter zu verbessern.

### Offenbarung der Erfindung

Die vorstehend genannte Aufgabe wird durch ein Verfahren zur Anpassung einer Ansicht auf einer Anzeigeeinheit einer Anwenderschnittstelle sowie durch eine Anwenderschnittstelle und ein Fahrzeug mit einer solchen Anwenderschnittstelle gemäß der unabhängigen Ansprüche gelöst. Das erfindungsgemäße Verfahren dient der Anpassung einer Ansicht auf einer Anzeigeeinheit einer Anwenderschnittstelle. Die Anzeigeeinheit kann beispielsweise ein berührungsempfindliches Anzeigeinstrument ("Display") umfassen und durch eine Annäherungssensorik zur Erkennung der Präsenz eines Eingabemittels in einem Bereich vor der Anzeigeeinheit ergänzt werden. Die Anzeigeeinheit kann insbesondere als fest in einem Fahrzeug verbautes Display einer Mensch-Maschine-Schnittstelle (MMS) und/oder in Form eines Teils eines Kombiinstrumentes ausgestaltet sein. In einem ersten Schritt eines Ausführungsbeispiels wird ein Konfigurationsmodus für eine geteilte Ansicht mit einer ersten Sektion und einer zweiten Sektion auf der Anzeigeeinheit aufgerufen. Mit anderen Worten nimmt der Anwender eine Eingabe vor, im Ansprechen auf welche die geteilte Ansicht erzeugt bzw. modifiziert werden kann. Dabei stellen die erste Sektion und die zweite Sektion Oberflächenbereiche der Ansicht dar, welche inhaltlich unabhängig voneinander zum Beispiel Funktionsbereichen eines Fortbewegungsmittels zugeordnet werden können. In einem zweiten Schritt wird eine Vielzahl Bedienflächen, repräsentierend einen jeweiligen Funktionsumfang, angezeigt. Die Bedienflächen dienen alleine der Konfiguration der ersten Sektion und der zweiten Sektion und stellen selbst keine Möglichkeit zum Starten einer mit ihnen assoziierten Fahrzeugfunktion dar. Insbesondere können die Bedienflächen erst im Ansprechen auf das Aufrufen des Konfigurationsmodus' angezeigt werden. In einem dritten Schritt wählt der Anwender eine Bedienfläche aus der Vielzahl Bedienflächen zur Anzeige eines korrespondierenden Funktionsumfangs in der ersten Sektion der geteilten Ansicht (oder in der zweiten Sektion der geteilten Ansicht) aus. Dabei wählt der Anwender sowohl die Funktion als auch den Ort, an welchem sie zukünftig dargestellt werden soll (erste Sektion oder zweite Sektion), wahlfrei aus. Anschließend bestätigt der Anwender die ausgewählte Bedienfläche in Verbindung mit der ersten Sektion und besiegelt damit eine zukünftige räumliche Zuordnung des gewünschten Funktionsumfangs zu einem Oberflächenbereich der Anzeige. Auf diese Weise ermöglicht die vorliegende Offenbarung sowohl eine ergonomische Konfiguration der geteilten Ansicht als auch eine ergonomische Bedienung der korrespondierenden Funktionsumfänge nach dem Beenden des Konfigurationsmodus'. Die Vielzahl Bedienflächen ist entlang einer Demarkationslinie zwischen der ersten und der zweiten Sektion angeordnet bzw. stellt eine Demarkationslinie bzw. einen Demarkationsbereich dar. Auf diese Weise kann der Anwender nach dem Teilen eines Anzeigebereichs in eine erste und eine zweite Sektion die zur Auswahl stehenden Bedienflächen schnell und intuitiv sichten und wahlfrei zunächst die erste Sektion oder die zweite Sektion mit einem gewünschten Funktionsumfang füllen. Dies kann beispielsweise durch ein Auswählen einer Bedienfläche mittels einer Berührung der Anzeigeeinheit durch ein Eingabemittel erfolgen, welches anschließend auf die gewünschte Sektion verschoben wird. Eine auf diese Weise vorgenommene Zuordnung kann beispielsweise bestätigt werden, indem der Kontakt zwischen dem Eingabemittel (z.B. ein Finger eines Anwenders, ein Stylus o.Ä.) und der Oberfläche der Anzeigeeinheit nach der wie vorstehend beschriebenen Bewegung beendet wird. Die vorstehend beschriebenen Bedienschritte zur Definition der Inhalte einer geteilten Ansicht haben sich als besonders intuitiv und einfach durchführbar herausgestellt.

Die Unteransprüche zeigen bevorzugte Weiterbildungen der Erfindung.

Bevorzugt kann das Verfahren weiter ein Auswählen einer vordefinierten Vorlage zur relativen Anordnung der ersten Sektion und der zweiten Sektion für die geteilte Ansicht umfassen. Mit anderen Worten kann eine Vielzahl von Masken angezeigt werden, durch welche die relative Anordnung der Bestandteile der geteilten Ansicht zur Auswahl gestellt werden. Die Auswahl der Vorlage bzw. Maske kann der Anwender vor oder nach der Auswahl der Bedienflächen vornehmen. Beispielsweise kann der Anwender zunächst drei Bedienflächen auswählen, welche er zeitgleich auf der Anzeigeeinheit darstellen lassen möchte. Im Ansprechen darauf werden ihm solche Templates dargestellt, welche jeweils drei Sektionen in unterschiedlichen räumlichen Zuordnungen darstellen. Alternativ kann der Anwender zunächst aus einer Vielzahl unterschiedlicher Entwurfsvorlagen eine räumliche Zuordnung der enthaltenen Sektionen auswählen (wodurch er auch die Anzahl der Sektionen definiert) und im Anschluss die Sektionen der Ansicht, wie oben beschrieben, mit Funktionsumfängen füllen.

Alternativ oder zusätzlich kann ein Schritt vorgesehen sein, in welchem der Anwender eine räumliche Anordnung der Sektionen in der geteilten Ansicht zunächst eigenständig und weitgehend wahlfrei definiert. Das Definieren kann bevorzugt unter Verwendung bestimmter Randbedingungen frei erfolgen. Insbesondere kann dabei automatisch dafür Sorge getragen werden, dass die Bildschirmfläche bestmöglich genutzt wird. Je nach Format der Anzeigeeinheit kann der Anwender daher Positionen auf der Anzeigeeinheit definieren, auf welchen nachfolgend jeweilige Sektionen angeordnet werden sollen. Alternativ oder zusätzlich kann der Anwender Grenzlinien zwischen Sektionen definieren.

Dies kann beispielsweise unter Verwendung einer berührungsempfindlichen Oberfläche der Anzeigeeinheit oder durch Verwendung einer anderen Erfassungseinheit erfolgen. Beispielsweise kann auch eine Annäherungssensorik (z.B. unter Verwendung einer Infrarot-LED-Leiste) die entsprechende Anwendergestik erfassen und in eine korrespondierende geteilte Ansicht umsetzen. Bevorzugt können die vom Anwender getätigten Eingaben mit einer Vielzahl abgespeicherter Vorlagen verglichen werden und die der Eingabe am ähnlichsten erscheinende Vorlage dem Anwender zur Verwendung angeboten werden. Dabei kann ein (arithmetischer oder geometrischer) Abstand zwischen einer Anwendereingabe und einer jeweiligen Sektion aus der Vielfalt von Vorlagen ermittelt und bewertet werden. Die vorgenannten Möglichkeiten erhöhen die Flexibilität gegenüber bekannten Konfigurationsverfahren und sind intuitiver als die bekannten Verfahren anwendbar.

Bevorzugt wird die Vielzahl Bedienflächen in Form einer verschieblichen Reihung zur Auswahl gestellt. Mit anderen Worten wird ein Band von miteinander fluchtenden Bedienflächen dargestellt, welche beispielsweise über eine Geste unter Berührung mit der Oberfläche der Anzeigeeinheit verschoben werden kann. Auf diese Weise können die dargestellten Bedienflächen so groß dargestellt werden, dass nicht sämtliche zur Auswahl stehenden Bedienflächen der Reihung zeitgleich auf der Anzeigeeinheit dargestellt werden können. Auf diese Weise wird die optische Orientierung durch den Anwender verbessert, wodurch die Bedienung während des Führens eines Fortbewegungsmittels eine geringere Verkehrsgefährdung bedeutet.

Für das Beenden des Konfigurationsmodus' sind unterschiedliche Szenarien möglich. Beispielsweise kann ein Zeitraum ohne Anwenderinteraktion mit der Anzeigeeinheit im Konfigurationsmodus gemessen werden und der Konfigurationsmodus im Ansprechen darauf beendet werden. Alternativ oder zusätzlich kann erkannt werden, dass das verwendete Eingabemittel einen vordefinierten Bereich vor der Anzeigeeinheit verlassen hat. Dies kann beispielsweise unter Verwendung einer sogenannten Annäherungssensorik erfolgen. Eine weitere Möglichkeit besteht darin, nach dem erstmaligen Definieren eines gewünschten Funktionsumfangs für eine jede zu befüllende Sektion den Konfigurationsmodus automatisch zu beenden. Schließlich ist auch eine Bedienung einer hierfür vorgesehenen Schaltfläche oder eines in Hardware ausgeführten Bedienelementes möglich.

Eine intuitive Bedienung zum Fusionieren zweier Sektionen der geteilten Ansicht erfolgt durch die folgenden Schritte: Zunächst wird für eine erste Sektion der geteilten Ansicht eine erste Bedienfläche ausgewählt und bestätigt. Anschließend wird für eine zweite (z.B. benachbarte) Sektion der geteilten Ansicht dieselbe Bedienfläche ausgewählt und bestätigt. Anschließend werden die Sektionen derart fusioniert, dass ein mit der ausgewählten Bedienfläche assoziierter Funktionsumfang auf einem Teilbereich der Ansicht dargestellt wird, auf welchem zuvor die erste Sektion und die zweite Sektion dargestellt wurden. Sofern die erste Sektion und die zweite Sektion nicht benachbart waren, kann automatisch eine geeignete Vorlage verwendet oder dem Anwender mehrere mögliche geeignete Vorlagen zur Auswahl gestellt werden. Letzteres kann beispielsweise in Form eines sogenannten Pop up-Menüs o.Ä. erfolgen. Auf diese Weise kann eine Reduzierung der Vielfalt dargestellter Funktionsumfänge erfolgen, ohne dass die vorgeschlagenen Bedienschritte sämtlich erneut durchgeführt werden müssen.

Das Aufrufen des Konfigurationsmodus' kann auf unterschiedliche Weisen erfolgen. Beispielsweise kann eine Sensorleiste oder andere auch zur Annäherungssensorik geeignete Hardware betätigt werden, indem die Sensorleiste beispielsweise an einer gewünschten Position unterhalb der Anzeigeeinheit für eine vordefinierte Zeitdauer mit einem Eingabemittel berührt wird. Insbesondere eine horizontale Position der Demarkationslinie lässt sich so intuitiv und rasch definieren. Alternativ oder zusätzlich kann auch eine eigens hierfür vordefinierte und angezeigte Schaltfläche auf der Anzeigeeinheit der Anwenderschnittstelle betätigt werden ("Soft Key"). Alternativ oder zusätzlich kann auch eine Geste in einem vordefinierten Erkennungsbereich vor der Anzeigeeinheit ausgeführt werden, wobei die Geste insbesondere eine zur Anzeigeeinheit weisende geöffnete Handinnenfläche umfasst. Die vorstehend genannte Geste kann beispielsweise mit Hilfe optischer und/oder kapazitiver Sensorik erkannt und als Anwenderwunsch zur Modifikation der Anzeige interpretiert werden. Auch die vorstehend genannte Geste kann bevorzugt mit einer Mindestdauer assoziiert sein, so dass erst nach Verstreichen dieser Mindestdauer während des Durchführens der Geste der Konfigurationsmodus gestartet wird. Die vorstehend genannten Möglichkeiten zum Aufrufen des Konfigurationsmodus' stellen intuitive und sicher erkennbare Eingaben eines Anwenderwunsches dar. Zur Ergänzung der Offenbarung wird auf die Merkmale des nachfolgend beschriebenen zweiten Aspektes der vorliegenden Offenbarung verwiesen.

Gemäß einem zweiten Aspekt der vorliegenden Offenbarung wird ein Verfahren zur Anpassung einer Ansicht auf einer Anzeigeeinheit einer Anwenderschnittstelle vorgeschlagen. Zunächst wird hierbei eine vordefinierte Geste bezüglich der Anwenderschnittstelle für eine vordefinierte Mindestdauer ausgeführt. Im Stand der Technik sind solche Gesten auch als "Long Press"-Geste bekannt, sofern die Geste unter Kontakt zur Oberfläche der Anzeigeeinheit durchgeführt wird und im Wesentlichen keine Bewegung des verwendeten Eingabemittels umfasst. In diesem Fall umfasst die Anzeigeeinheit eine berührungsempfindliche Oberfläche ("Touch Screen").

Diese Geste kann jedoch auch in einem Annäherungsbereich der Anwenderschnittstelle erfolgen, indem das Eingabemittel stillgehalten wird. Im Ansprechen auf ein Erkennen der vordefinierten Geste wird ein Konfigurationsmodus für eine geteilte Ansicht mit einer ersten Sektion und einer zweiten Sektion auf der Anzeigeeinheit dargestellt. Die erste Sektion und die zweite Sektion werden in Abhängigkeit einer Position der vordefinierten Geste bezüglich der Anwenderschnittstelle (insbesondere bezüglich der Anzeigeeinheit) angeordnet. Mit anderen Worten ergibt sich eine Demarkationslinie zwischen der ersten Sektion und der zweiten Sektion entsprechend der Position der Geste. Das vorstehend genannte Verfahren ermöglicht eine besonders intuitive Möglichkeit zum Teilen einer Ansicht in eine erste und eine zweite Sektion. Bevorzugt kann für die Geste eine Mindestdauer größer 0,1 Sekunden bis 0,8 Sekunden vordefiniert sein. Die exakte Dauer kann beispielsweise in einem Einstellungsmenü der Anwenderschnittstelle für ein Auslösen von Sekundärfunktionen vordefiniert worden sein bzw. durch einen Anwender vordefiniert werden. Auf diese Weise wird eine kurzzeitige bzw. versehentliche Berührung der Anzeigeeinheit bzw. ein kurzzeitiges bzw. versehentliches Durchstreichen eines Annäherungsbereiches nicht als Befehl zum Aufrufen des Konfigurationsmodus' interpretiert.

Wie in Verbindung mit dem erstgenannten Aspekt beschrieben, kann weiter eine Vielzahl Bedienflächen repräsentierend einen jeweiligen Funktionsumfang angezeigt werden, aus welchem der Anwender diejenige Bedienfläche auswählt, welche mit dem für die erste Sektion gewünschten Funktionsumfang assoziiert ist. Um die Auswahl wirksam werden zu lassen, bestätigt der Anwender anschließend die Bedienfläche für die erste Sektion. Die Merkmale, Merkmalskombination sowie die sich aus diesen ergebenden Vorteile entsprechen den in Verbindung mit dem erstgenannten Aspekt beschriebenen derart ersichtlich, dass zur Vermeidung von Wiederholungen auf die obigen Ausführungen verwiesen wird.

Unabhängig von den vorgenannten Aspekten kann die Vielzahl Bedienflächen jeweiligen Funktionsumfängen aus den Bereichen Musikwiedergabe, Routenführung, Klimabedienung, Informationswiedergabe zu Reisestatistiken ("Bordcomputer") o.ä. zugeordnet sein. Hierzu können die Bedienflächen mit einem Sinnbild ("Icon") und/oder in Textform gekennzeichnet sein. Beispielsweise kann eine Note für die Musikwiedergabe, ein Kompass für die Routenführung, ein Thermometer für die Klimabedienung und eine Tankstelle für die Funktionen des Bordcomputers stellvertretend dargestellt werden. Auf diese Weise lässt sich eine kompakte und dennoch übersichtliche Darstellung der Bedienflächen vornehmen, während die zu befüllenden Sektionen in ihrer Größe im Wesentlichen unverändert zeitgleich darstellbar sind.

Um die Schritte zur Anpassung der Ansicht noch intuitiver zu machen und den Anwender durch die bloße Darstellung auf die vorgesehenen Funktionen hinzuweisen, kann weiter vorgesehen sein, die Vielzahl zur Auswahl gestellter Bedienflächen optisch gegenüber der geteilten Ansicht (den zu befüllenden Sektionen) hervorzuheben. Dies kann beispielsweise durch eine erhöhte Farbsättigung der Bedienflächen im Vergleich zu den übrigen Bildschirminhalten erzeugt werden. Zudem kann die Vielzahl zur Auswahl gestellter Bedienflächen durch einen Schattenwurf auf andere Bildschirminhalte erhöht dargestellt werden, so dass sich ein "Abwerfen" der Bedienflächen auf die Sektionen der geteilten Ansicht optisch anbietet. Alternativ oder zusätzlich kann die Vielzahl der Bedienflächen bewegt bzw. animiert dargestellt werden, wodurch eine Mobilität der Bedienflächen suggeriert wird. Beispielsweise können die Bedienflächen wackeln oder um eine mittlere Position "tanzen". Wählt der Anwender eine Bedienfläche aus und verschiebt diese über eine zu befüllende Sektion, kann auch die betreffende Sektion optisch hervorgehoben werden. Dies kann beispielsweise durch Veränderung der Farbsättigung, durch Darstellen eines Rahmens ("Corona") oder durch transparentes Anzeigen eines gegebenenfalls nachfolgend zu bestätigenden Funktionsumfangs erfolgen. Auf diese Weise wird der Anwender durch einfach zu begreifende Anzeigeszenarien durch die Bedienschritte der hierin offenbarten Verfahren geführt.

Gemäß einem dritten Aspekt der vorliegenden Offenbarung wird eine Anwenderschnittstelle vorgeschlagen, welche eine Anzeigeeinheit und eine Verarbeitungseinheit umfasst. Die Verarbeitungseinheit kann beispielsweise einen programmierbaren Prozessor (z.B. einen Mikrocontroller, einen Nanocontroller o.Ä.) umfassen, der optional auch für weitere Funktionen (abseits der vorliegenden Offenbarung) verwendet werden kann. Weiter sind in der Anwenderschnittstelle Eingabemittel zur Entgegennahme von Anwendereingaben vorgesehen. Die Eingabemittel können beispielsweise in Form einer berührungsempfindlichen Oberfläche der Anzeigeeinheit ausgestaltet sein. Alternativ oder zusätzlich können Infrarot-LEDs in Form einer Leiste als Annäherungssensorik von den Eingabemitteln umfasst sein. Die Anzeigeeinheit, die Verarbeitungseinheit und die Eingabemittel sind informationstechnisch miteinander wirkverbunden. Durch eine entsprechende Programmierung der Verarbeitungseinheit wird die Anwenderschnittstelle eingerichtet, die Schritte eines der hierin offenbarten Verfahren (bevorzugt in Kombination miteinander) durchzuführen. Bevorzugt kann die Anwenderschnittstelle als Mensch-Maschine-Schnittstelle, beispielsweise für ein Fortbewegungsmittel, ausgestaltet und eingerichtet sein, dauerhaft in ein Armaturenbrett eines Fortbewegungsmittels eingebaut zu werden und drahtgebunden mit (Sensor-) Informationen aus dem Bordnetz des Fortbewegungsmittels versorgt zu werden. Auf diese Weise können beispielsweise Informationen eines Bordcomputers zur Anzeige in einer geteilten Ansicht empfangen und aufbereitet werden. Auch die Merkmale, Merkmalskombination und die sich aus diesen ergebenden Vorteile der offenbarten Anwenderschnittstelle entsprechen den in Verbindung mit dem erstgenannten sowie dem zweitgenannten Aspekt beschriebenen derart ersichtlich, dass zur Vermeidung von Wiederholungen auf die obigen Ausführungen verwiesen wird.

Zusätzlich wird ein computerlesbares Medium mit Computerprogrammcode sowie eine Signalfolge, repräsentierend Computerprogrammcode, vorgeschlagen, welcher, wenn er auf einer Verarbeitungseinheit einer Anwenderschnittstelle gemäß dem drittgenannten Aspekt ausgeführt wird, die Anwenderschnittstelle zur Verwendung in einem hierin offenbarten Verfahren einrichtet. Das computerlesbare Medium kann beispielsweise eine CD, eine DVD, ein anderes optisches Speichermedium, ein Speicherstick oder ein anderer flüchtiger oder nicht flüchtiger Speicher sein. Durch die Signalfolge werden auch über eine Telekommunikationsinfrastruktur in den Bereich der vorliegenden Offenbarung gelangte Signale adressiert.

Schließlich wird auch ein Fortbewegungsmittel (z.B. ein Pkw, ein Lkw o.Ä.) mit einer erfindungsgemäßen Anwenderschnittstelle unter Schutz gestellt. Auch bezüglich des erfindungsgemäßen Fortbewegungsmittels wird hinsichtlich der Merkmale, Merkmalskombination sowie der sich aus diesen ergebenden Vorteile auf die obigen Ausführungen verwiesen.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Ansicht eines Ausführungsbeispiels eines erfindungsgemäßen Fortbewegungsmittels;
- Figuren 2 bis 6: Darstellungen erfindungsgemäßer Bedienschritte in Verbindung mit Ausführungsbeispielen des erfindungsgemäßen Verfahrens; und
- Figur 7: ein Flussdiagramm, veranschaulichend Schritte eines Ausführungsbeispiels eines erfindungsgemäßen Verfahrens.

### Ausführungsformen der Erfindung

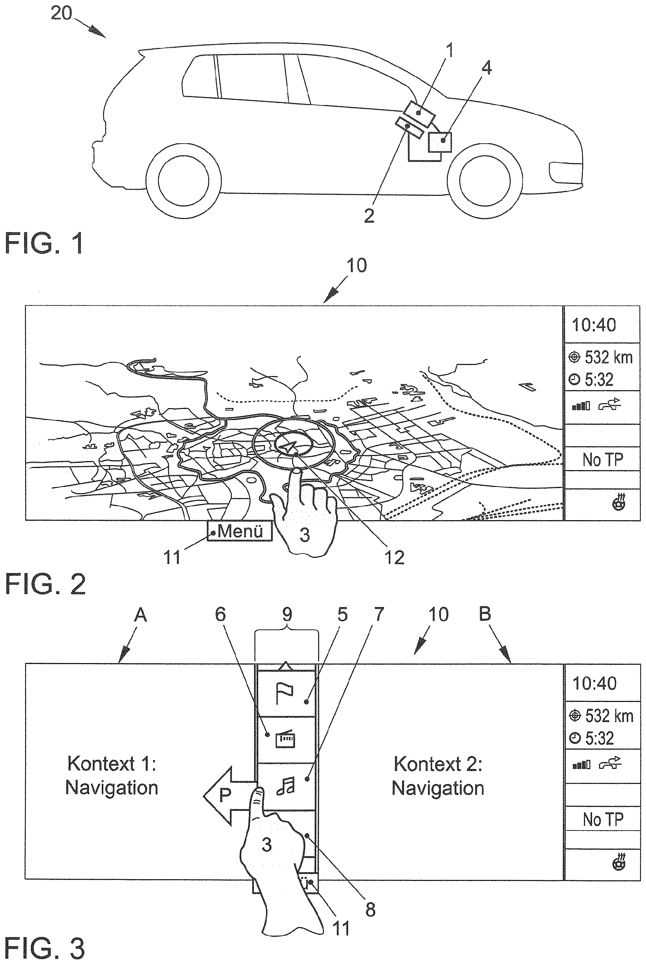

Figur 1 zeigt einen Pkw 20 als Fortbewegungsmittel. Im Armaturenbrett des Pkw 20 sind ein Display 1 als Anzeigeeinheit, ein elektronisches Steuergerät 4 als Verarbeitungseinheit und eine Infrarot-LED-Leiste 2 als Eingabemittel angeordnet und informationstechnisch miteinander wirkverbunden. Das Display 1, die Infrarot-LED-Leiste 2 sowie das elektronische Steuergerät 4 bilden eine erfindungsgemäße Anwenderschnittstelle, deren Funktion in Verbindung mit den Figuren 2 bis 7 erläutert wird.

Figur 2 zeigt eine Ansicht 10 einer Anzeigeeinheit 1, auf welcher ein Ausschnitt einer Landkarte dargestellt wird. Unterhalb der Ansicht 10 ist eine vordefinierte Schaltfläche 11 (beschriftet mit "Menü") dargestellt. Auf der Landkarte führt die Hand 3 eines Anwenders an einer durch den Anwender vordefinierten Position 12 eine Long Press-Eingabe als Beispiel einer vordefinierten Geste mit einer durch das Steuergerät vordefinierten Mindestdauer aus.

Figur 3 zeigt einen auf den in Figur 2 veranschaulichten Bedienschritt folgenden Bedienschritt. Im Ansprechen auf die Long Press-Eingabe bildet eine Vielzahl Bedienflächen 5, 6, 7, 8 einen Demarkationsbereich 9 zwischen einer ersten Sektion A und einer zweiten Sektion B aus. Dabei sind die Bedienflächen 5, 6, 7, 8 vertikal übereinander gereiht. Es zeigen eine erste Bedienfläche 5 ein Fähnchensymbol als Sinnbild zu Informationen zu einer Zielposition, eine zweite Bedienfläche 6 ein Radiosymbol als Sinnbild für den Rundfunkempfang und eine dritte Bedienfläche 7 eine Note als Sinnbild für die Musikwiedergabe. Unter der Hand 3 des Anwenders befinden sich eine vierte Bedienfläche 8 und die in Figur 2 erkennbare Menü-Schaltfläche 11. Die in Figur 2 scharf dargestellte Landkarte ist in Figur 3 nur noch verschwommen erkennbar, um die Vielzahl Bedienflächen 5, 6, 7, 8 optisch gegenüber der geteilten Ansicht hervorzuheben. Um die den Sektionen A, B aktuell zugeteilten Funktionsumfänge dennoch klar erkennen zu können, sind die Texte "Kontext 1: Navigation" bzw. "Kontext 2: Navigation" auf den jeweiligen Sektionen A, B dargestellt. Die Hand des Anwenders 3 weist die Musikwiedergabefunktion der ersten Sektion A zu, indem sie entsprechend dem Pfeil P die dritte Bedienfläche 7 nach links verschiebt.

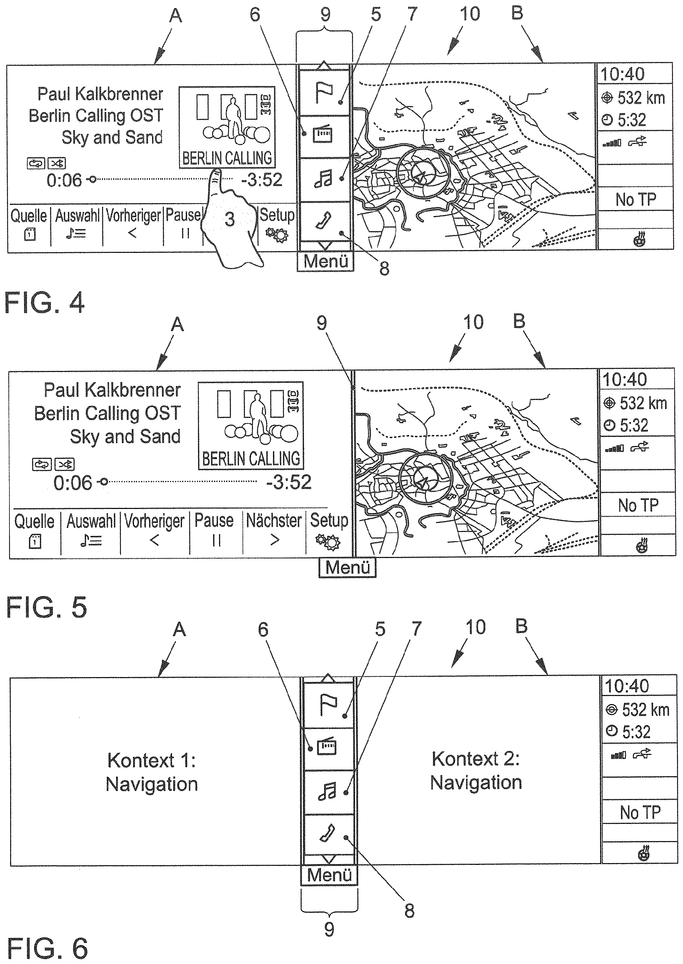

Figur 4 zeigt das Resultat des in Verbindung mit Figur 3 beschriebenen Verfahrensschrittes. Der den Klangeinstellungen zugeordnete Funktionsumfang wird in der ersten Sektion A so dargestellt, wie er nach einem Bestätigen der Auswahl dargestellt würde. Um das Resultat der Auswahl noch deutlicher zu machen, wird nun auch die in der zweiten Sektion B dargestellte Landkarte wieder scharf dargestellt. Bislang wird auch die Reihung der Bedienflächen 5, 6, 7, 8 im Demarkationsbereich 9 weiterhin dargestellt.

In Figur 5 hat der Anwender seine Hand 3 von der Oberfläche der Anzeigeeinheit 1 abgehoben und somit die vorgenommene Auswahl bestätigt. Die Vielzahl Bedienflächen 5, 6, 7, 8 ist entfernt worden und der in Figur 3 dargestellte Demarkationsbereich 9 ist zu einer schmalen Demarkationslinie 9 verjüngt dargestellt. Die erste Sektion A stellt nun einen der Musikwiedergabe zugeordneten Funktionsumfang, die zweite Sektion B einen der Routenführung zugeordneten Funktionsumfang dar.

Figur 6 zeigt eine mögliche Anzeige nach dem erneuten Aufrufen des in Figur 3 dargestellten Konfigurationsmodus'. Beispielsweise durch eine erneute Long Press-Geste hat der Anwender die Vielzahl Bedienflächen erneut eingeblendet. Auffällig ist, dass der Funktionsumfang innerhalb der ersten Sektion A (unscharf) einen Teil der Landkarte darstellt, welche im zuvor beschriebenen Bedienschritt gegen die Klangeinstellungen 7 ausgetauscht worden war. Dies ermöglicht eine rasche und unkomplizierte Rückänderung der vorgenommenen Anpassungen. Wird nämlich der Konfigurationsmodus erneut geöffnet und bis zum Ablauf einer vordefinierten Zeitdauer ("inactivity timer") keine Anwendereingabe registriert, wird automatisch zu einer vorletzten Ansicht 10 zurückgekehrt. Selbstverständlich könnte der Anwender jedoch, ausgehend von der in Figur 6 dargestellten Situation, erneut Bedienflächen 5, 6, 7, 8 aus dem Demarkationsbereich 9 in die jeweiligen Sektionen A, B schieben und so eine neue Wunschansicht erstellen.

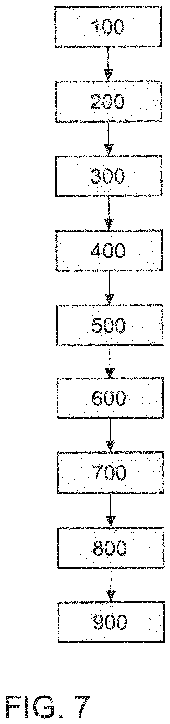

Figur 7 zeigt ein Flussdiagramm, veranschaulichend Schritte eines Ausführungsbeispiels eines erfindungsgemäßen Verfahrens. In Schritt 100 ruft ein Anwender einen Konfigurationsmodus für eine geteilte Ansicht mit mindestens einer ersten Sektion und einer zweiten Sektion auf einer Anzeigeeinheit einer Anwenderschnittstelle auf. In Schritt 200 definiert der Anwender anschließend eine räumliche Anordnung in der geteilten Ansicht enthaltener Sektionen. Mit anderen Worten arrangiert der Anwender zunächst diejenigen Bereiche, welchen er anschließend Funktionsumfänge zuweist. Hierzu werden in Schritt 300 eine Vielzahl Bedienflächen, repräsentierend einen jeweiligen Funktionsumfang, angezeigt. Der Anwender wählt eine Bedienfläche aus der Vielzahl aus, um einer ersten Sektion einen korrespondierenden Funktionsumfang zuzuweisen. In Schritt 500 bestätigt der Anwender die ausgewählte Bedienfläche, im Ansprechen worauf der Funktionsumfang in der ersten Sektion angezeigt wird. Um die erste Sektion mit einer zweiten Sektion zu fusionieren, mit anderen Worten also, die Anzahl der Sektionen um 1 zu vermindern, wählt der Anwender in Schritt 600 dieselbe Bedienfläche auch für eine zweite Sektion der geteilten Ansicht aus. Anschließend bestätigt der Anwender in Schritt 700 auch für die zweite Sektion der geteilten Ansicht die bereits der ersten Sektion zugewiesene Bedienfläche. Im Ansprechen darauf wird erfindungsgemäß nicht derselbe Funktionsumfang sowohl in der ersten Sektion als auch in der zweiten Sektion, sondern auf einer fusionierten Sektion in vergrößerter Form dargestellt. Anstatt eine vollständige Neukonfiguration der geteilten Ansicht vornehmen zu müssen, kann der Anwender auf diese Weise die Vielfalt der dargestellten Funktionsumfänge einfach und intuitiv vermindern. Selbstverständlich kann bei entsprechender Wiederholung der vorgenannten Bedienschritte (in Abhängigkeit der zuvor dargestellten Sektionsanteile) bis zur bildschirmfüllenden Darstellung eines einzelnen gewünschten Funktionsumfangs fortgefahren werden.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Display
- 2: Infrarot-LED-Leiste
- 3: Hand des Anwenders
- 4: Elektronisches Steuergerät
- 5, 6,: Bedienflächen
- 7, 8 9: Demarkationslinie, Demarkationsbereich
- 10: Ansicht
- 11: Schaltfläche
- 12: Eingabeposition
- 20: Pkw
- 100: bis Verfahrensschritte
- 900 A: Erste Sektion
- B: Zweite Sektion
- P: Pfeil

## Patentansprüche

1. Verfahren zur Anpassung einer Ansicht auf einer Anzeigeeinheit (1) einer Anwenderschnittstelle umfassend die Schritte:
- Aufrufen (100) eines Konfigurationsmodus' für eine geteilte Ansicht (10) mit einer ersten Sektion (A) und einer zweiten Sektion (B) auf der Anzeigeeinheit (1),
- Anzeigen (300) einer Vielzahl Bedienflächen (5, 6, 7, 8) repräsentierend einen jeweiligen Funktionsumfang als Demarkationsbereich (9) zwischen der ersten Sektion (A) und der zweiten Sektion (B),
- Auswählen (400) einer Bedienfläche (7) aus der Vielzahl Bedienflächen (5, 6, 7, 8) zur Anzeige eines korrespondierenden Funktionsumfangs in der ersten Sektion (A) der geteilten Ansicht (10), und
- Bestätigen (500) der ausgewählten Bedienfläche (7) wobei
- das Auswählen (400) der Bedienfläche (7) ein Verschieben der Bedienfläche (7) und
- das Bestätigen der ausgewählten Bedienfläche (7) ein Fallenlassen der Bedienfläche (7) in der ersten Sektion (A), umfassen, **gekennzeichnet durch** die Schritte:
- erneutes Aufrufen (100) des Konfigurationsmodus' für die geteilte Ansicht (10),
- Ermitteln eines Zeitraumes ohne Anwenderinteraktion mit der Anzeigeeinheit (1) im Konfigurationsmodus, im Ansprechen darauf
- Zurückkehren zu einer vorletzten Ansicht (10).

2. Verfahren nach Anspruch 1, wobei das Verfahren weiter den Schritt
- eines Auswählens einer vordefinierten Vorlage zur relativen Anordnung der ersten Sektion (A) und der zweiten Sektion (B) für die geteilte Ansicht, umfasst, und/oder
- eines Definierens (200) einer räumlichen Anordnung in der geteilten Ansicht (10) enthaltener Sektionen (A, B) umfasst.

3. Verfahren nach Anspruch 1 oder 2, wobei die Vielzahl Bedienflächen (5, 6, 7, 8) in Form einer verschieblichen Reihung zur Auswahl gestellt werden.

4. Verfahren nach einem der vorstehenden Ansprüche umfassend den Schritt
- Beenden (900) des Konfigurationsmodus' im Ansprechen auf einen Ablauf einer vordefinierten Zeitdauer ohne Anwenderinteraktion.

5. Verfahren nach einem der vorstehenden Ansprüche, weiter umfassend die Schritte
- Auswählen (600) derselben Bedienfläche (7) zur Anzeige in der zur ersten Sektion (A) benachbarten zweiten Sektion (B) der geteilten Ansicht (10),
- Bestätigen (700) der Bedienfläche (7), und im Ansprechen darauf
- automatisches Fusionieren (800) der ersten Sektion (A) und der zweiten Sektion (B).

6. Verfahren nach einem der vorstehenden Ansprüche, wobei das Aufrufen des Konfigurationsmodus' durch
- Betätigen einer Sensorleiste (2), und/oder
- Betätigen einer vordefinierten Schaltfläche (11) auf der Anzeigeeinheit (1) der Anwenderschnittstelle und/oder
- Ausführen einer Geste in einem vordefinierten Erkennungsbereich vor der Anzeigeeinheit (1) erfolgt, wobei die Geste insbesondere eine zur Anzeigeeinheit (1) weisend geöffnete Handinnenfläche umfasst.

7. Verfahren nach einem der vorstehenden Ansprüche, wobei der Konfigurationsmodus durch das Ausführen einer vordefinierten Geste bezüglich der Anwenderschnittstelle für eine vordefinierte Mindestdauer, aufgerufen wird, wobei die erste Sektion (A) und die zweite Sektion (B) in Abhängigkeit einer Position (12) der vordefinierten Geste auf der Anzeigeeinheit (1) relativ zueinander aufgebaut werden.

8. Verfahren nach Anspruch 7, wobei eine Demarkationslinie (9) zwischen der ersten Sektion (A) und der zweiten Sektion (B) in Abhängigkeit der Position (12) der vordefinierten Geste angeordnet wird.

9. Verfahren nach einem der Ansprüche 7 oder 8, wobei
- die vordefinierte Geste eine vordefinierte Mindestkontaktdauer mit der Anwenderschnittstelle und/oder der Anzeigeeinheit (1) aufweist, und/oder
- die vordefinierte Geste eine vordefinierte maximale Bewegung relativ zu der Anwenderschnittstelle aufweist, und/oder
- die vordefinierte Geste eine Mindestdauer größer 0,2 s insbesondere größer 0,5 s aufweist.

10. Verfahren nach einem der vorstehenden Ansprüche 1 bis 6, wobei die Vielzahl Bedienflächen (5, 6, 7, 8) jeweilige Funktionsumfänge aus den Bereichen
- Musikwiedergabe, und/oder
- Routenführung, und/oder
- Klimabedienung, und/oder
- Informationswiedergabe zu Reisestatistiken ("Bordcomputer") repräsentieren.

11. Verfahren nach einem der vorstehenden Ansprüche 1 bis 6 oder 10, wobei die Vielzahl zur Auswahl gestellter Bedienflächen (5, 6, 7, 8) optisch gegenüber der geteilten Ansicht (10) hervorgehoben wird, indem
- die Farbsättigung der Bedienflächen (5, 6, 7, 8) gegenüber anderen Bildschirminhalten erhöht, und/oder
- ein Schattenwurf der Bedienflächen (5, 6, 7, 8) auf andere Bildschirminhalte dargestellt, und/oder
- einzelne Bedienflächen (5, 6, 7, 8) bewegt und/oder animiert dargestellt werden.

12. Anwenderschnittstelle umfassend
- eine Anzeigeeinheit (1),
- eine Verarbeitungseinheit (4), und
- Eingabemittel (2) zur Entgegennahme von Anwendereingaben, wobei die Verarbeitungseinheit (4) die Anwenderschnittstelle zur Verwendung in einem Verfahren gemäß einem der vorstehenden Ansprüche einrichtet.

13. Anwenderschnittstelle nach Anspruch 12, welche eingerichtet ist, dauerhaft in ein Fortbewegungsmittel (20) integriert zu werden und drahtgebunden Sensorinformationen des Fortbewegungsmittels (20) darzustellen.

14. Computerlesbares Medium umfassend Computerprogrammcode oder Signalfolge repräsentierend Computerprogrammcode, welcher, wenn er auf einer Verarbeitungseinheit (4) einer Anwenderschnittstelle nach Anspruch 12 oder 13 ausgeführt wird, die Anwenderschnittstelle zur Verwendung in einem Verfahren gemäß einem der Ansprüche 1 bis 11 einrichtet.

15. Fortbewegungsmittel (20), insbesondere Fahrzeug, umfassend eine Anwenderschnittstelle nach Anspruch 12 oder 13.

## Claims

1. Method for adapting a view on a display unit (1) of a user interface, comprising the steps of:
- calling (100) a configuration mode for a split view (10) with a first section (A) and a second section (B) on the display unit (1),
- displaying (300) a multiplicity of operating areas (5, 6, 7, 8) representing a respective range of functions as a demarcation region (9) between the first section (A) and the second section (B),
- selecting (400) an operating area (7) from the multiplicity of operating areas (5, 6, 7, 8) for displaying a corresponding range of functions in the first section (A) of the split view (10), and
- confirming (500) the selected operating area (7), wherein
- selecting (400) the operating area (7) comprises moving the operating area (7), and
- confirming the selected operating area (7) comprises dropping the operating area (7) in the first section (A), **characterized by** the steps of:
- calling (100) the configuration mode for the split view (10) again,
- determining a period without user interaction with the display unit (1) in the configuration mode, and, in response thereto,
- returning to a penultimate view (10).

2. Method according to Claim 1, wherein the method also comprises the step of
- selecting a predefined template for the relative arrangement of the first section (A) and the second section (B) for the split view, and/or
- defining (200) a spatial arrangement of sections (A, B) included in the split view (10).

3. Method according to Claim 1 or 2, wherein the multiplicity of operating areas (5, 6, 7, 8) are provided for selection in the form of a movable sequence.

4. Method according to one of the preceding claims, comprising the step of
- ending (900) the configuration mode in response to an expiry of a predefined period without user interaction.

5. Method according to one of the preceding claims, also comprising the steps of
- selecting (600) the same operating area (7) for display in the second section (B) of the split view (10) that is adjacent to the first section (A),
- confirming (700) the operating area (7), and, in response thereto,
- automatically fusing (800) the first section (A) and the second section (B).

6. Method according to one of the preceding claims, wherein the configuration mode is called by
- actuating a sensor strip (2), and/or
- actuating a predefined button (11) on the display unit (1) of the user interface, and/or
- carrying out a gesture in a predefined recognition region in front of the display unit (1), wherein the gesture comprises, in particular, an open palm facing the display unit (1) .

7. Method according to one of the preceding claims, wherein the configuration mode is called by carrying out a predefined gesture with respect to the user interface for a predefined minimum duration, wherein the first section (A) and the second section (B) are set up relative to one another on the basis of a position (12) of the predefined gesture on the display unit (1).

8. Method according to Claim 7, wherein a demarcation line (9) is arranged between the first section (A) and the second section (B) on the basis of the position (12) of the predefined gesture.

9. Method according to either of Claims 7 and 8, wherein
- the predefined gesture has a predefined minimum contact duration with the user interface and/or the display unit (1), and/or
- the predefined gesture has a predefined maximum movement relative to the user interface, and/or
- the predefined gesture has a minimum duration of greater than 0.2 s, in particular greater than 0.5 s.

10. Method according to one of the preceding Claims 1 to 6, wherein the multiplicity of operating areas (5, 6, 7, 8) represent respective ranges of functions from the fields of
- music playback, and/or
- route guidance, and/or
- climate control, and/or
- reproduction of information relating to journey statistics ("on-board computer").

11. Method according to one of the preceding Claims 1 to 6 or 10, wherein the multiplicity of operating areas (5, 6, 7, 8) provided for selection are optically highlighted with respect to the split view (10) by
- increasing the colour saturation of the operating areas (5, 6, 7, 8) with respect to other screen contents, and/or
- shadowing the operating areas (5, 6, 7, 8) onto other screen contents, and/or
- moving individual operating areas (5, 6, 7, 8) and/or displaying them in an animated manner.

12. User interface comprising
- a display unit (1),
- a processing unit (4), and
- input means (2) for receiving user inputs, wherein the processing unit (4) sets up the user interface for use in a method according to one of the preceding claims.

13. User interface according to Claim 12, which is configured to be permanently integrated in a means of transport (20) and to present sensor information relating to the means of transport (20) in a wired manner.

14. Computer-readable medium comprising computer program code or a signal sequence representing computer program code which, when executed on a processing unit (4) of a user interface according to Claim 12 or 13, sets up the user interface for use in a method according to one of Claims 1 to 11.

15. Means of transport (20), in particular vehicle, comprising a user interface according to Claim 12 or 13.

## Revendications

1. Procédé pour adapter une vue sur une unité d'affichage (1) d'une interface utilisateur, comprenant les étapes consistant à :
- appeler (100) un mode de configuration destiné à une vue divisée (10) comportant une première section (A) et une deuxième section (B) sur l'unité d'affichage (1),
- afficher (300) une pluralité de surfaces de commande (5, 6, 7, 8) représentant une gamme respective de fonctions sous la forme d'une zone de démarcation (9) entre la première section (A) et la deuxième section (B),
- sélectionner (400) une surface de commande (7) parmi la pluralité de surfaces de commande (5, 6, 7, 8) pour afficher une gamme correspondante de fonctions dans la première section (A) de la vue divisée (10), et
- confirmer (500) la surface de commande sélectionnée (7), dans lequel
- la sélection (400) de la surface de commande (7) consiste à déplacer la surface de commande (7), et
- la confirmation de la surface de commande sélectionnée (7) consiste à relâcher la surface de commande (7) dans la première section (A), **caractérisé par** les étapes consistant à :
- appeler à nouveau (100) le mode de configuration pour la vue partagée (10),
- déterminer un intervalle de temps sans interaction de l'utilisateur avec l'unité d'affichage (1) dans le mode de configuration et, en réponse à cela,
- retourner à une avant-dernière vue (10).

2. Procédé selon la revendication 1, dans lequel le procédé comprend en outre l'étape consistant à
- sélectionner un modèle prédéfini pour l'agencement relatif de la première section (A) et de la deuxième section (B) pour la vue divisée, et/ou
- définir (200) un agencement spatial des sections (A, B) contenues dans la vue divisée (10).

3. Procédé selon la revendication 1 ou 2, dans lequel la pluralité de surfaces de commande (5, 6, 7, 8) sont présentées pour être sélectionnées sous la forme d'une séquence déplaçable.

4. Procédé selon l'une quelconque des revendications précédentes comprenant l'étape consistant à
- terminer (900) le mode de configuration en réponse à l'expiration d'une période de temps prédéfinie sans interaction avec l'utilisateur.

5. Procédé selon l'une quelconque des revendications précédentes, comprenant en outre les étapes consistant à
- sélectionner (600) le même panneau de commande (7) pour l'afficher dans la deuxième section (B) adjacente à la première section (A), de la vue divisée (10),
- confirmer (700) le panneau de commande (7), et en réponse à cela
- fusionner automatiquement (800) la première section (A) et la deuxième section (B).

6. Procédé selon l'une quelconque des revendications précédentes, dans lequel l'appel du mode de configuration consiste à
- actionner une barre de capteurs (2), et/ou
- actionner une surface de commutation prédéfinie (11) sur l'unité d'affichage (1) de l'interface utilisateur et/ou
- exécuter un geste dans une zone de détection prédéfinie devant l'unité d'affichage (1), dans lequel le geste comprend notamment une paume de main ouverte en direction de l'unité d'affichage (1).

7. Procédé selon l'une quelconque des revendications précédentes, dans lequel le mode de configuration est appelé par exécution d'un geste prédéfini par rapport à l'interface utilisateur pendant une durée minimale prédéfinie,
dans lequel la première section (A) et la deuxième section (B) sont construites l'une par rapport à l'autre en fonction d'une position (12) du geste prédéfini sur l'unité d'affichage (1).

8. Procédé selon la revendication 7, dans lequel une ligne de démarcation (9) est agencée entre la première section (A) et la deuxième section (B) en fonction de la position (12) du geste prédéfini.

9. Procédé selon l'une quelconque des revendications 7 ou 8, dans lequel
- le geste prédéfini présente une durée de contact minimale prédéfinie avec l'interface utilisateur et/ou l'unité d'affichage (1), et/ou
- le geste prédéfini présente un mouvement maximal prédéfini par rapport à l'interface utilisateur, et/ou
- le geste prédéfini présente une durée minimale supérieure à 0,2 s, notamment supérieure à 0,5 s.

10. Procédé selon l'une quelconque des revendications 1 à 6 précédentes, dans lequel la pluralité de surfaces de commande (5, 6, 7, 8) représentent des fonctionnalités respectives relevant des domaines suivants :
- lecture de musique, et/ou
- guidage routier, et/ou
- commande de climatisation, et/ou
- reproduction d'informations sur les statistiques de voyage ("ordinateur de bord").

11. Procédé selon l'une quelconque des revendications 1 à 6 ou 10 précédentes, dans lequel la pluralité de surfaces de commande (5, 6, 7, 8) présentées pour la sélection est mise en évidence optiquement par rapport à la vue divisée (10), par le fait que
- la saturation des couleurs des surfaces de commande (5, 6, 7, 8) est augmentée par rapport à d'autres contenus de l'écran, et/ou
- une ombre portée des surfaces de commande (5, 6, 7, 8) est représentée sur d'autres contenus de l'écran, et/ou
- des surfaces de commande (5, 6, 7, 8) individuelles sont déplacées et/ou représentées de manière animée.

12. Interface utilisateur comprenant
- une unité d'affichage (1),
- une unité de traitement (4), et
- des moyens d'entrée (2) permettant de recevoir des entrées d'utilisateurs, dans laquelle l'unité de traitement (4) crée l'interface utilisateur pour une utilisation dans un procédé selon l'une quelconque des revendications précédentes.

13. Interface utilisateur selon la revendication 12, conçue pour être intégrée de manière permanente dans un moyen de transport (20) et pour représenter des informations de capteurs du moyen de transport (20) de manière câblée.

14. Support lisible par ordinateur comprenant un code de programme d'ordinateur ou une séquence de signaux représentant un code de programme d'ordinateur qui, lorsqu'il est exécuté sur une unité de traitement (4) d'une interface utilisateur selon la revendication 12 ou 13, crée l'interface utilisateur destinée à être utilisée dans un procédé selon l'une quelconque des revendications 1 à 11.

15. Moyen de transport (20), notamment véhicule, comprenant une interface utilisateur selon la revendication 12 ou 13.
